# EUROPÄISCHE PATENTSCHRIFT

(11) **EP 2 642 137 B1**
(45) Veröffentlichungstag und Bekanntmachung des Hinweises auf die Patenterteilung: **23.04.2014**
(21) Anmeldenummer: 12002061.5
(22) Anmeldetag: 23.03.2012
(51) Int. Cl.: F16B 15/00

(54) **Klammerstab zur Befestigung von Dämmplatten an Holzständern**
Clip row for fixing insulation boards to wooden stands
Agrafeuse pour fixation de plaques d'isolation sur supports en bois

(43) Veröffentlichungstag der Anmeldung: 25.09.2013
(73) Patentinhaber: Joh. Friedrich Behrens AG, 22926 Ahrensburg (DE)
(72) Erfinder: Albrecht, Klaus, 23843 Bad Oldesloe (DE)
(74) Vertreter: Hauck Patent- und Rechtsanwälte

(56) Entgegenhaltungen:
- EP-A1- 1 097 632
- DE-U- 1 956 332
- DE-U1- 29 903 556
- US-A- 3 403 592

## Beschreibung

Die Erfindung betrifft einen Klammerstab mit einer Vielzahl von miteinander verbundenen Klammern zur Befestigung von Dämmplatten an Holzständern. Die Klammem derartiger Klammerstäbe weisen jeweils einen Rücken und zwei mit dem Rücken verbundene, parallel zueinander angeordnete Schenkel auf. Die Schenkel weisen jeweils einen zylindrischen Abschnitt und einen Endabschnitt auf.

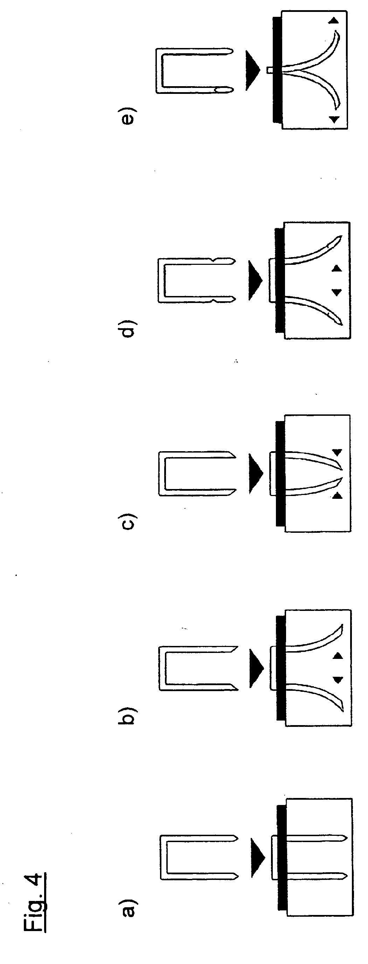

Klammerstäbe sind bewährte Befestigungsmittel zur Verarbeitung mit Klammergeräten. Hierzu werden die Klammerstäbe in spezielle Aufnahmen der Klammergeräte eingesetzt. Das Klammergerät treibt die Klammern dann einzeln in das Werkstück ein, indem es jeweils eine vorderste Klammer eines eingesetzten Klammerstabs von dem Klammerstab löst und in das Werkstück eintreibt. Je nach Anwendungsgebiet weisen die Klammern ganz unterschiedliche Abmessungen und unterschiedlich geformte Endabschnitte auf. Die gebräuchlichen Klammeranschnitte werden anhand der Figur 4 erläutert. Jeweils in den oberen Teilen der Figur ist eine Klammer in einer Draufsicht dargestellt. In den unteren Teilen der Figur ist die Klammer schematisch im in ein Werkstück eingetriebenen Zustand gezeigt.

Figur 4 a) zeigt den besonders häufig verwendeten Meißelanschnitt, bei dem die Endabschnitte jeweils zwei einander gegenüberliegende Schrägflächen aufweisen. Die Schrägflächen schneiden sich am vorderen Ende der Endabschnitte, so dass eine etwa senkrecht zur Zeichenebene verlaufende Schneidkante entsteht. Wie im unteren Teil der Figur gezeigt, verlaufen die Schenkel dieser Klammern im eingetriebenen Zustand idealerweise geradlinig in das Werkstück hinein.

Figur 4 b) zeigt eine Klammer mit einem Innenanschnitt, bei dem die Endabschnitte jeweils eine Schrägfläche an der Innenseite aufweisen. Teil c) der Figur 4 zeigt einen sogenannten Außenanschnitt, bei dem die Endabschnitte ebenfalls jeweils nur eine Schrägfläche aufweisen, diesmal an der Außenseite. Der Innenanschnitt führt zu einem Aufspreizen der Schenkel beim Eintreiben der Klammer, während sich die Schenkel bei einem Außenanschnitt beim Eintreiben aufeinander zu bewegen. In beiden Fällen werden durch den gekrümmten Verlauf der Schenkel im Werkstück die Auszugskräfte der Klammer erhöht.

Teil d) der Figur zeigt eine Alternative, die ebenfalls zu einem Aufspreizen der Schenkel führt und für die Anmelderin durch das Patent EP 1 331 407 B1 geschütz ist. Hierzu werden Endabschnitte mit einem gewöhnlichen Meißelanschnitt verwendet, jedoch in Kombination mit an der Außenseite der Schenkel angebrachten Rillen in den zylindrischen Abschnitten der Klammern.

Alle Klammern der Figuren 4 a) bis 4 d) können im sogenannten Mehrdrahtverfahren hergestellt werden. Bei diesem Herstellungsverfahren werden Drähte für die Klammern zunächst parallel zueinander angeordnet und miteinander zu einem flachen Band verbunden. Von diesem Band wird jeweils ein für einen Klammerstab benötigter Abschnitt abgetrennt, der durch zweimaliges Abkanten in die U-Form des fertigen Klammerstabs gebracht wird. Die Endabschnitte, gegebenenfalls einschließlich zusätzlich vorhandener Rillen gemäß Figur 4 d), können bei der Verarbeitung des Bandmaterials ausgeführt werden, also in einem Arbeitsgang für alle Klammern eines Klammerstabs. Insbesondere die Anschnitte können gleichzeitig mit dem Trennen des Bandmaterials in die für jeweils einen Klammerstab benötigten Längsabschnitte hergestellt werden.

Ebenfalls bekannt sind Klammern mit einem sogenannten Sägeanschnitt gemäß Figur 4 e). Bei dieser Variante weist jeder Endabschnitt ebenfalls nur eine Schrägfläche auf, die jedoch gegenüber der Ebene der Klammer geneigt angeordnet ist, wie in der Figur gezeigt. Die beiden Schrägflächen einer Klammer weisen entgegengesetzte Neigungen auf, so dass die beiden Schenkel der Klammer sich beim Eintreiben in entgegengesetzte Richtungen aufspreizen. Klammerstäbe mit einem Sägeanschnitt können nicht ohne Weiteres im skizzierten Mehrdrahtverfahren hergestellt werden. Stattdessen wird in der Regel ein sogenanntes Eindrahtverfahren verwendet, bei dem die Anschnitte an den einzelnen Endabschnitten hergestellt werden, bevor die einzelnen Drähte miteinander verbunden werden.

Bei der Befestigung von Dämmplatten an Holzständern, insbesondere im Fertighausbau, entstehen aufgrund der großen Dicke der Dämmplatten und der geringen Breite der Holzständer besondere Schwierigkeiten. Zwar lassen sich die für die Befestigung benötigten, sehr langen Klammern trotz einer Dicke der Dämmplatten von beispielsweise 10 cm oder mehr leicht in die relativ nachgiebigen Dämmplatten eintreiben, jedoch nehmen die Schenkel der Klammer häufig keinen geradlinigen Verlauf durch die Dämmplatte hindurch. Stattdessen weichen die Schenkel so stark von dem angestrebten geradlinigen Verlauf ab, dass die an der Rückseite der Platte angeordneten Holzständer verfehlt werden. Eine ungenügende Befestigung ist die Folge.

Aus der Druckschrift DE 299 03 556 U1 sind Klammern zur Befestigung von Dämmplatten auf einer Holzunterkonstruktion bekannt geworden. Die bekannten Klammern weisen die im Oberbegriff des Anspruchs 1 angegebenen Merkmale auf.

Aus der Druckschrift EP 1 097 632 A1 ist eine Klammer mit einem geschwungenen Klammerrücken bekannt geworden, die zur Befestigung von Pflanzentrieben an speziellen Stützpfählen dienen. Die Stützpfähle weisen einen harten Kern auf, beispielsweise aus PVC, und sind mit einer Lage aus Kokosfasern umwickelt. Die Klammern werden schräg in die Pfähle eingetrieben. Um zu verhindern, dass ein Eindringen in den harten Kern zu hohen Widerständen führt, sind die Spitzen der bekannten Klammern so abgeschrägt, dass sie am harten Kern abgleiten.

Aus der Druckschrift US-Patent Nr. 3,403,592 sind Klammern zur Befestigung von Kabeln oder Rohrleitungen mit relativ großem Querschnitt an einer Wand bekannt geworden. Die Klammern sind relativ breit, mit einem Rücken, dessen Länge etwa der Länge der Schenkel entspricht. Die Schenkel weisen eine lang gestreckte Spitze auf, deren Länge etwa der Hälfte der Länge eines Schenkels entspricht. Hierdurch soll ein greradliniges Eintreiben der Schenkel begünstigt werden.

Davon ausgehend ist es die Aufgabe der Erfindung, einen Klammerstab mit einer Vielzahl von miteinander verbundenen Klammern zur Befestigung von Dämmplatten an Holzständern zur Verfügung zu stellen, dessen Klammern geradliniger in die Dämmplatten eingetrieben werden können und so eine zuverlässige Befestigung auch von Dämmplatten großer Dicke an relativ schmalen Holzständern erlauben.

Diese Aufgabe wird gelöst durch den Klammerstab mit den Merkmalen des Anspruchs 1. Vorteilhafte Ausgestaltungen sind in den Unteransprüchen angegeben. Der Klammerstab weist eine Vielzahl von miteinander verbundenen Klammern auf und dient zur Befestigung von Dämmplatten an Holzständern. Jede der Klammern weist einen Rücken und zwei mit dem Rücken verbundene, parallel zueinander angeordnete Schenkel auf. Die Länge der Schenkel ist mindestens dreimal so groß wie die Breite des Rückens. Jeder Schenkel weist einen zylindrischen Abschnitt und einen Endabschnitt auf. Der zylindrische Abschnitt hat einen über seine Länge gleichmäßigen Querschnitt, der zum Beispiel kreisförmig, aber auch oval, abgeflacht oder vieleckig sein kann. Bei der Erfindung verjüngt sich jeder Endabschnitt mit zunehmendem Abstand von dem zylindrischen Abschnitt und läuft spitz in einem auf einer Mittellängsachse des jeweiligen Schenkels angeordneten Punkt zusammen.

Die Erfindung beruht auf der Erkenntnis, dass herkömmliche Klammern mit einem Meißelanschnitt bei der Verwendung mit Dämmplatten nicht zum gewünschten Erfolg führen. Es wird vermutet, dass hierzu einerseits die besonderen Eigenschaften der Dämmplatten beitragen, denn diese bestehen in der Regel aus inhomogenen Werkstoffen wie z. B. wirr angeordneten Holzfasern. Außerdem wurde festgestellt, dass Meißelanschnitte insbesondere bei größeren Drahtstärken schwerlich mit perfekter Symmetrie gefertigt werden können. Stattdessen kommt es beim Herstellen der Meißelanschnitte mittels einer Stanze zu einem unsymmetrischen Stanzabriss, der zu einer seitlichen Ablenkung des Schenkels beim Eintreiben in die Dämmplatte führen kann.

Überraschend wurde beobachtet, dass die Herstellung geeigneter Klammern einfacher gelingt, wenn die Schenkel mit in einem Punkt auf der Mittellängsachse des jeweiligen Schenkels spitz zusammenlaufenden Endabschnitten gefertigt werden. Es wird vermutet, dass der beim Eintreiben beobachtete geradlinigere Verlauf von Klammern mit derartigen Endabschnitten einerseits darauf zurückzuführen ist, dass die annähernd punktförmig auslaufenden Spitzen weniger auf Materialinhomogenitäten der Dämmplatten ansprechen. Andererseits könnte zum Erfolg beitragen, dass bei der Fertigung derartiger Spitzen einfacher eine hinreichende Symmetrie des Endabschnitts erreicht werden kann.

Die erfindungsgemäßen Klammerstäbe können insbesondere im eingangs skizzierten Eindrahtverfahren hergestellt werden. Die Endabschnitte können beim Trennen des Drahts in die jeweils für eine Klammer benötigten Längsabschnitte geformt werden. Anschließend können die Längsabschnitte durch zweimaliges Abkanten im 90°-Winkel in die endgültige Form der Klammern gebracht und miteinander verbunden werden, insbesondere über ein geeignetes Klebemittel.

Dass die Endabschnitte spitz in einem auf einer Mittellängsachse des jeweiligen Schenkels angeordneten Punkt zusammenlaufen, bedeutet nicht notwendigerweise, dass eine perfekt punktförmige Spitze vorhanden sein muss. Auch mehr oder weniger stark abgerundete oder infolge von Fertigungstoleranzen deformierte, nicht perfekt punktförmige Spitzen werden als spitz in einem Punkt zusammenlaufend angesehen.

Für die sonstige Formgebung der sich verjüngenden Endabschnitte gibt es unterschiedliche Möglichkeiten. Die Endabschnitte können beispielsweise konisch ausgebildet sein. Ebenfalls möglich ist die Verwendung sogenannter ballistischer Spitzen. Diese sind vergleichbar mit den Spitzen von Projektilen geformt, weisen also sich von dem zylindrischen Abschnitt zu der Spitze hin mit zunehmender Steigung verringernde Querschnittsabmessungen auf.

In einer Ausgestaltung sind die Endabschnitte einer Klammer spiegelsymmetrisch zu einer die Mittellängsachsen beider Schenkel dieser Klammer einschließenden ersten Symmetrieebene. Dadurch wird eine Ablenkung der Endabschnitte senkrecht zu der ersten Symmetrieebene verhindert.

In einer Ausgestaltung ist der Endabschnitt eines Schenkels spiegelsymmetrisch zu einer zweiten Symmetrieebene, die die Mittellängsachse dieses Schenkels einschließt und senkrecht zu dem mit diesem Schenkel verbundenen Rücken angeordnet ist. Diese Maßnahme verhindert eine Ablenkung der Endabschnitte insbesondere senkrecht zu der zweiten Symmetrieebene. Ablenkungen in dieser Richtung sind besonders schwer zur kontrollieren, weil die Klammern in dieser Richtung bedingt durch das zweimalige Abkanten des Drahtes relativ große Fertigungstoleranzen aufweisen, denen ein an einem Klammergerät ausgebildeter Führungsmechanismus Rechnung tragen muss. Außerdem können einige einfache Klammergeräte die Schenkel während des Eintreibens an den einander zugewandten Innenseiten der beiden Schenkel nicht führen, weil in diesen Bereichen angeordnete Führungselemente beim Eintreiben der Klammer aus dem Weg des Klammerrückens entfernt werden müssen, um nicht mit diesem zu kollidieren, was eine relativ aufwendige Konstruktion der Führung erfordert. Es ist daher besonders vorteilhaft, der Ablenkung eines Schenkels zu dem jeweils anderen Schenkel der Klammer hin durch die genannte spiegelsymmetrische Gestaltung des Endabschnitts entgegenzuwirken.

In einer Ausgestaltung weist der Endabschnitt im Querschnitt zwei erste Kanten auf, die in der ersten Symmetrieebene angeordnet sind. Die beiden ersten Kanten können insbesondere von dem die Spitze des Endabschnitts bildenden Punkt ausgehen. Sie können sich von dort aus bis zu dem zylindrischen Abschnitt hin erstrecken, zum Beispiel geradlinig. Die ersten Kanten wirken ähnlich wie Schneidkanten und bewirken eine Führung der Endabschnitte in Richtung der Mittellängsachse. Dadurch verhindern sie eine unerwünschte Ablenkung der Schenkel aus der ersten Symmetrieebene.

In einer Ausgestaltung weist der Endabschnitt im Querschnitt zwei zweite Kanten auf, die in der zweiten Symmetrieebene angeordnet sind. Die beiden zweiten Kanten können insbesondere von dem die Spitze des Endabschnitts bildenden Punkt ausgehen. Sie können sich von dort aus bis zu dem zylindrischen Abschnitt hin erstrecken, zum Beispiel geradlinig. Die zweiten Kanten wirken ebenfalls wie die ersten Kanten ähnlich wie Schneidkanten und bewirken eine Führung der Endabschnitte in Richtung der Mittellängsachse. Wegen ihrer Anordnung in der zweiten Symmetrieebene verhindern sie insbesondere eine unerwünschte Ablenkung der Schenkel aus dieser zweiten Symmetrieebene.

In einer Ausgestaltung sind die beiden ersten Kanten und/oder die beiden zweiten Kanten in einem Winkel im Bereich von 20° bis 60° zur Mittellängsachse angeordnet. In diesem Winkelbereich wird Versuchen zufolge eine vorteilhafte Führungswirkung erreicht.

In einer Ausgestaltung sind die beiden zweiten Kanten länger als die beiden ersten Kanten. Die unterschiedlichen Längen können durch längere Halbachsen des Querschnitts in der zweiten Symmetrieebene als in der ersten Symmetrieebene gebildet werden. Ebenfalls möglich ist, die zweiten Kanten in einem kleineren Winkel zu der Mittellängsachse auszubilden als die ersten Kanten. Durch diese Ausgestaltung wird insbesondere die Führung in der zweiten Symmetrieebene verbessert, die aus den geschilderten Gründen in der Praxis besonders wichtig ist.

In einer Ausgestaltung weisen die Endabschnitte einen quadratischen oder rautenförmigen Querschnitt auf. Im Falle eines quadratischen Querschnitts können die Endabschnitte tetraedrisch sein, also die Form einer Pyramide mit quadratischer Grundfläche aufweisen. Derartige Spitzen werden auch als Diamantspitzen bezeichnet. Bei einem rautenförmigen Querschnitt sind an den vier Ecken des Querschnitts keine rechten Winkel ausgebildet, sondern die "Pyramide" hat eine rautenförmige Grundfläche mit vier gleichlangen Seiten. Derartige Endabschnitte mit rautenförmigem Querschnitt bieten sich insbesondere in Verbindung mit im Querschnitt ovalen oder abgeflachten Drähten an.

Bei der Erfindung weist der Endabschnitt eines Schenkels mindestens eine Schrägfläche auf, die gegenüber der Mittellängsachse des Schenkels in einem Winkel im Bereich von 20° bis 60° geneigt ist. Endabschnitte mit derartigen Schrägflächen können einfach hergestellt werden, insbesondere mit speziellen Stanzwerkzeugen, und tragen zu einem geradlinigen Eindringen der Schenkel bei.

In einer Ausgestaltung sind die Endabschnitte im Querschnitt oval oder kreisförmig. In diesem Fall können die Endabschnitte insgesamt insbesondere konisch oder abgeflacht-konisch sein. In beiden Fällen wird ein geradliniges Eindringen der Schenkel begünstigt.

In einer Ausgestaltung sind die zylindrischen Abschnitte und/oder der Rücken im Querschnitt oval oder kreisförmig. Insbesondere können zur Herstellung der Klammern Drähte mit entsprechendem Querschnitt verwendet werden.

In einer Ausgestaltung sind die zylindrischen Abschnitte und/oder der Rücken aus einem im Querschnitt kreisförmigen Draht hergestellt, der durch Walzen mit zwei gegenüberliegenden Abflachungen versehen ist. Durch dieses Walzen des Drahtes können die Schenkel, insbesondere die zylindrischen Abschnitte, durch Ausbilden Auch diese Maßnahme trägt zu einem geradlinigen Eindringen der Schenkel in den Werkstoff bei.

In einer Ausgestaltung weisen die zylindrischen Abschnitte und/oder die Rücken der Klammern einen Durchmesser im Bereich von 2 mm bis 4 mm auf. Bevorzugt kann der genannte Durchmesser im Bereich von 2,5 mm bis 3,5 mm liegen. Derartige Materialstärken erlauben die Herstellung auch sehr langer Klammern, die eine ausreichende Steifigkeit bei einer Schenkellänge im Bereich von beispielsweise 100 mm bis 220 mm, bevorzugt im Bereich von 160 mm bis 200 mm, aufweisen. Die Breite des Rückens derartiger Klammern kann beispielsweise im Bereich von 15 mm bis 35 mm, bevorzugt im Bereich von 20 mm bis 30 mm, liegen.

In einer Ausgestaltung sind die Klammern über ein Klebemittel miteinander verbunden. Das Klebemittel kann beispielsweise ein Lack oder ein Leim sein. Ebenfalls möglich, und zwar alternativ oder auch zusätzlich, ist die Verwendung von Klebestreifen, beispielsweise aus Papier oder aus einem elastischen Material.

Die Erfindung wird nachfolgend anhand von in Figuren dargestellten Ausführungsbeispielen näher erläutert. Es zeigen:
- Fig. 1: einen erfindungsgemäßen Klammerstab in einer vereinfachten, schematischen Darstellung,
- Fig. 2 a) - e): eine Klammer eines erfindungsgemäßen Klammerstabs in unterschiedlichen Ansichten,
- Fig. 3 a) - e): eine Klammer eines anderen erfindungsgemäßen Klammerstabs in unterschiedlichen Ansichten,
- Fig. 4 a) - e): fünf unterschiedliche Klammern gemäß dem Stand der Technik.

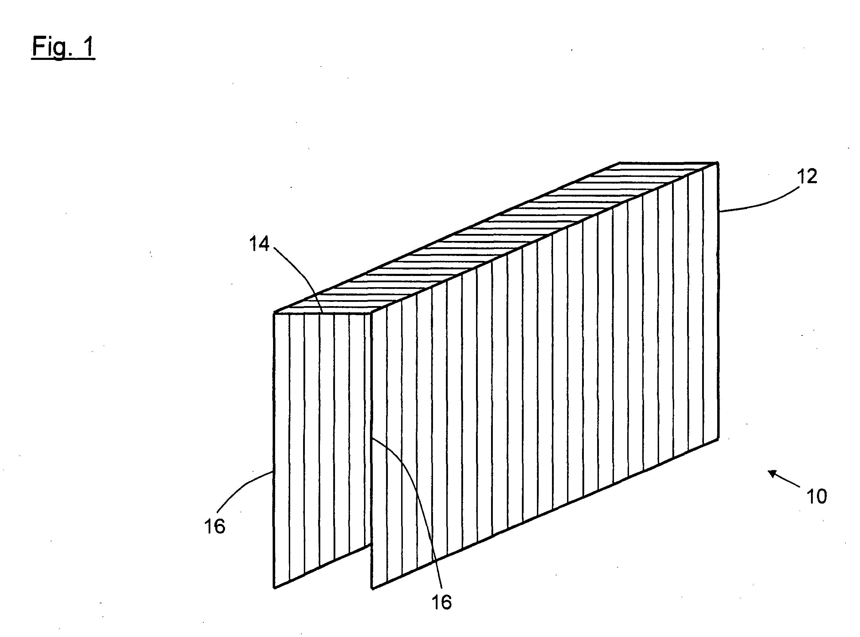

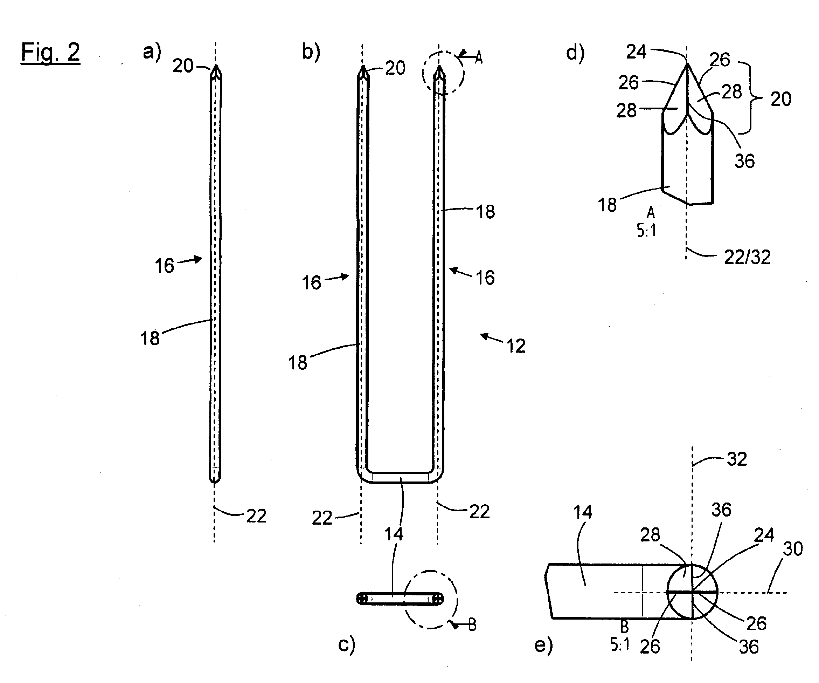

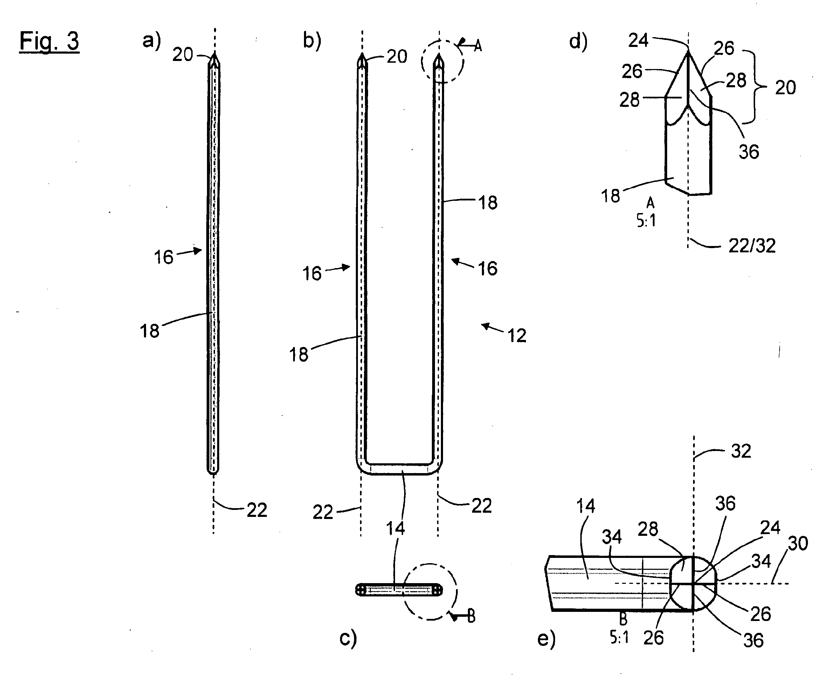

Der Klammerstab 10 aus Fig. 1 weist eine Vielzahl miteinander verbundener Klammern 12 auf. Die Klammern 12 sind über ein Klebemittel miteinander verbunden. Jede Klammer 12 bildet ein U mit einem Rücken 14 und zwei Schenkeln 16. Die aneinandergereihten Klammern 12 bilden den im Profil ebenfalls u-förmig ausgebildeten Klammerstab 10. Auf diese Weise können beispielsweise jeweils 10 bis 200 Klammern 12 zu einem Klammerstab 10 zusammengefasst sein. Die Einzelheiten der einzelnen Klammern 12 sind in den Fign. 2 und 3 besser erkennbar.

Fig. 2 zeigt eine Klammer 12 eines erfindungsgemäßen Klammerstabs 10, die aus einem im Querschnitt kreisförmigen Stahldraht besteht. Fig. 2 a) zeigt eine Draufsicht von der Seite auf einen der Schenkel 16. In der Draufsicht der Fig. 2 b) ist der Blick auf die Ebene der Klammer 12 gerichtet, so dass beide Schenkel 16 und der Rücken 14 der Klammer 12 sichtbar sind. In Fig. 2 c) ist der Blick von der dem Rücken 14 abgewandten Seite auf die freien Enden der beiden Schenkel 16 gerichtet. Fig. 2 d) zeigt eine Vergrößerung des mit A bezeichneten Abschnitts der Fig. 2 b). Fig. 2 e) zeigt eine Vergrößerung des mit B bezeichneten Ausschnitts der Fig. 2 c).

In den Fign. 2 a) und 2 b) erkennt man, dass die Schenkel 16 jeweils einen zylindrischen Abschnitt 18 aufweisen, der an einem Ende mit dem Rücken 14 der Klammer 12 verbunden ist. Der Übergang zwischen dem Rücken 14 und dem zylindrischen Abschnitt 18 weist einen relativ kleinen Krümmungsradius auf, der durch Abwinkeln des Drahtes entstanden ist. Die zylindrischen Abschnitte 18 erstrecken sich fast über die gesamte Länge der Schenkel 16. Zum freien Ende der Schenkel 16 hin schließt sich an die zylindrischen Abschnitte 18 jeweils ein Endabschnitt 20 an. Jeder Schenkel 16 weist eine Mittellängsachse 22 auf, die gestrichelt eingezeichnet ist. Die Mittellängsachse 22 erstreckt sich geradlinig durch die Mitte des zylindrischen Abschnitts 18.

Wie am besten in der Fig. 2 d) zu erkennen ist, verjüngen sich die Endabschnitte 20 mit zunehmendem Abstand von dem zylindrischen Abschnitt 18 und laufen spitz in einem auf der Mittellängsachse 22 angeordneten Punkt 24 zusammen. Am Punkt 24 ist eine Spitze ausgebildet ist, die mehr oder weniger stark abgerundet sein kann.

Wie in der Fig. 2 d) in Verbindung mit der Fig. 2 e) weiterhin zu erkennen ist, ist der Endabschnitt 20 spiegelsymmetrisch zu einer zweiten Symmetrieebene 32 ausgebildet. Die zweite Symmetrieebene 32 verläuft senkrecht zur Zeichenebene, d.h. gleichsam senkrecht zu dem Rücken 14 der zugehörigen Klammer 12, und schließt die Mittellängsachse 22 ein.

Der Endabschnitt 20 weist außerdem zwei erste Kanten 26 und zwei zweite Kanten 36 auf, zwischen denen jeweils Schrägflächen 28 ausgebildet sind. Die Schrägflächen sind gegenüber der Mittellängsachse 22 in einem Winkel von ungefähr 30° geneigt. Die beiden ersten Kanten 26 liegen in der ersten Symmetrieebene 30, entsprechend der Zeichenebene der Fig. 2 d). Die beiden zweiten Kanten 36, von denen eine dem Betrachter zugewandt, die andere an der Rückseite befindlich und daher nicht sichtbar ist, liegen in der zweiten Symmetrieebene 32. Die beiden ersten Kanten 26 liegen einander bezüglich der Mittellängsachse 22 gegenüber. Dies gilt auch für die beiden zweiten Kanten 36. Die ersten Kanten 26 und die zweiten Kanten 36 beginnen jeweils in dem Punkt 24 und erstrecken sich von dort geradlinig bis zum zylindrischen Abschnitt 18.

Wie in der Fig. 2 a) zu erkennen ist, sind die Endabschnitte 20 außerdem ebenfalls spiegelsymmetrisch ausgebildet relativ zu einer ersten Symmetrieebene 30, die die Mittellängsachsen 22 beider Schenkel 16 einschließt. Diese erste Symmetrieebene 30 steht in der Fig. 2 a) senkrecht auf die Zeichenebene.

Die beiden Schenkel 16 sind parallel zueinander ausgerichtet, entsprechend auch die beiden zugehörigen Mittellängsachsen 22. Zwischen dem Rücken 14 und den sich daran anschließenden Schenkeln 16 ist ein rechter Winkel ausgebildet.

In der Fig. 2 e) sind die erste Symmetrieebene 30 und die zweite Symmetrieebene 32 eingezeichnet. Beide stehen wiederum senkrecht auf die Zeichenebene. Man erkennt außerdem die vier Schrägflächen 28, die jeweils paarweise einander gegenüberliegend angeordnet sind, und die dazwischen verlaufenden ersten Kanten 26. und zweiten Kanten 36. Der die Spitze des Endabschnitts 20 bezeichnende Punkt 24 liegt sowohl in der ersten Symmetrieebene 30 als auch in der zweiten Symmetrieebene 32 und außerdem auf der Mittellängsachse 22.

In der Fig. 3 werden für die dem Ausführungsbeispiel der Fig. 2 entsprechenden Teile dieselben Bezugszeichen verwendet. Die in der Fig. 3 gezeigte Klammer 12 unterscheidet sich von derjenigen aus der Fig. 2 dadurch, dass der zur Herstellung verwendete, kreisförmige Draht durch Anwalzen mit zwei einander gegenüberliegenden Abflachungen 34 versehen ist. Dies ist am besten in der Fig. 3 e) erkennbar. Die Abflachungen 34 erstrecken sich über die gesamte Länge des für die Herstellung der Klammer verwendeten Drahts, d. h. sie sind sowohl am Rücken 14 als auch an den Schenkeln 16 bzw. jedenfalls an deren zylindrischen Abschnitten 18 ausgebildet. Wie insbesondere in der Fig. 3 e) erkennbar, sind die Abflachungen 34 an den zylindrischen Abschnitten 18 der Schenkel 16 parallel zur zweiten Symmetrieebene 32 ausgebildet. Die sich daran anschließenden Querschnittsabschnitte der zylindrischen Abschnitte 18 sind annähernd halbkreisförmig, jedoch durch die durch Walzen ausgeprägten Abflachungen 34 gegenüber idealen Halbkreisen leicht verformt.

Die Endabschnitte 20 der Klammer 12 aus Fig. 3 unterscheiden sich von denjenigen aus Fig. 2 durch den unterschiedlichen Querschnitt des verarbeiteten Drahts. Man erkennt dies am deutlichsten in der vergrößerten Darstellung der Fig. 3 d). Der Endabschnitt 20 weist ebenfalls vier gegenüber der Mittellängsachse 22 geneigt angeordnete Schrägflächen 28 auf. Diese werden jeweils von zwei unterschiedlichen Kanten 26, 36 begrenzt. Die ersten Kanten 26, die in der ersten Symmetrieebene 30 angeordnet sind, sind kürzer als die in der zweiten Symmetrieebene 32 angeordneten zweiten Kanten 36. Da die ersten und zweiten Kanten 26, 36 jeweils einen gleichgroßen Winkel mit der Längsachse 22 einschließen, ist die unterschiedliche Länge der ersten und zweiten Kanten 26, 36 auf die größeren Abmessungen des verarbeiteten Drahts in der zweiten Symmetrieebene 32 im Vergleich zu den Abmessungen in der ersten Symmetrieebene 30 zurückzuführen. Dennoch kann die größere Länge der zweiten Kanten 36 eine Ablenkung der Schenkel 16 beim Eintreiben in einen Werkstoff zur Mitte der Klammer 12 hin besonders wirksam verhindern.

Die Fig. 4 zum Stand der Technik wurde bereits in der Beschreibungseinleitung erläutert.

## Patentansprüche

1. Klammerstab (10) mit einer Vielzahl von miteinander verbundenen Klammern (12) zur Befestigung von Dämmplatten an Holzständern, wobei
• jede der Klammern (12) einen Rücken (14) und zwei mit dem Rücken (14) verbundene, parallel zueinander angeordnete Schenkel (16) aufweist,
• die Länge der Schenkel (16) mindestens dreimal so groß ist wie die Breite des Rückens (14) und
• jeder Schenkel (16) einen zylindrischen Abschnitt (18) und einen Endabschnitt (20) aufweist, **dadurch gekennzeichnet, dass**
• jeder Endabschnitt (20) sich mit zunehmendem Abstand von dem zylindrischen Abschnitt (18) verjüngt und spitz in einem auf einer Mittellängsachse (22) des jeweiligen Schenkels (16) angeordneten Punkt (24) zusammenläuft, wobei
• der Endabschnitt (20) eines Schenkels (16) mindestens eine Schrägfläche (28) aufweist, die gegenüber der Mittellängsachse (22) des Schenkels (16) in einem Winkel im Bereich von 20° bis 60° geneigt ist.

2. Klammerstab (10) nach Anspruch 1, **dadurch gekennzeichnet, dass** die Endabschnitte (20) einer Klammer (12) spiegelsymmetrisch zu einer die Mittellängsachsen (22) beider Schenkel (16) dieser Klammer (12) einschließenden ersten Symmetrieebene (30) sind.

3. Klammerstab (10) nach Anspruch 1 oder 2, **dadurch gekennzeichnet, dass** der Endabschnitt (20) eines Schenkels (16) spiegelsymmetrisch zu einer zweiten Symmetrieebene (32) ist, die die Mittellängsachse (22) dieses Schenkels (16) einschließt und senkrecht zu dem mit diesem Schenkel (16) verbundenen Rücken (14) angeordnet ist.

4. Klammerstab (10) nach Anspruch 2 oder 3, **dadurch gekennzeichnet, dass** der Endabschnitt (20) zwei erste Kanten (26) aufweist, die in der ersten Symmetrieebene (30) angeordnet sind.

5. Klammerstab (10) nach Anspruch 3 oder 4, **dadurch gekennzeichnet, dass** der Endabschnitt (20) zwei zweite Kanten (36) aufweist, die in der zweiten Symmetrieebene (32) angeordnet sind.

6. Klammerstab (10) nach Anspruch 4 oder 5, **dadurch gekennzeichnet, dass** die beiden ersten Kanten (26) und/oder die beiden zweiten Kanten (36) in einem Winkel im Bereich von 20° bis 60° zur Mittellängsachse (22) angeordnet sind.

7. Klammerstab (10) nach Anspruch 5 oder 6, **dadurch gekennzeichnet, dass** die beiden zweiten Kanten (36) länger sind als die beiden ersten Kanten (26).

8. Klammerstab (10) nach einem der Ansprüche 1 bis 7, **dadurch gekennzeichnet, dass** die Endabschnitte (20) einen quadratischen oder rautenförmigen Querschnitt aufweisen.

9. Klammerstab (10) nach einem der Ansprüche 1 bis 3, **dadurch gekennzeichnet, dass** die Endabschnitte (20) im Querschnitt oval oder kreisförmig sind.

10. Klammerstab (10) nach einem der Ansprüche 1 bis9, **dadurch gekennzeichnet, dass** die zylindrischen Abschnitte (18) und/oder der Rücken (14) im Querschnitt oval oder kreisförmig sind.

11. Klammerstab (10) nach einem der Ansprüche 1 bis 10, **dadurch gekennzeichnet, dass** die zylindrischen Abschnitte (18) und/oder der Rücken (14) aus einem im Querschnitt kreisförmigen Draht hergestellt sind, der durch Walzen mit zwei gegenüberliegenden Abflachungen (34) versehen ist.

12. Klammerstab (10) nach einem der Ansprüche 1 bis 11, **dadurch gekennzeichnet, dass** die zylindrischen Abschnitte (18) und/oder die Rücken (14) der Klammern (12) einen Durchmesser im Bereich von 2 mm bis 4 mm aufweisen.

13. Klammerstab (10) nach einem der Ansprüche 1 bis 12, **dadurch gekennzeichnet, dass** die Klammern (12) über ein Klebemittel miteinander verbunden sind.

## Claims

1. A staple strip (10) having a plurality of staples (12) connected to each other, for fastening insulating panels to wooden supports, wherein
• each of the staples (12) has a crown (14) and two legs (16), disposed parallel to each other and connected to the crown (14),
• the length of the legs (16) is at least three times as long as the width of the crown (14), and
• each leg (16) has a cylindrical section (18) and an end section (20), **characterized in that**
• each end section (20) tapers with increasing distance from the cylindrical section (18), and tapers to a point (24) disposed on a center longitudinal axis (22) of the respective leg (16), wherein
• the end section (20) of a leg (16) has at least one angled face (28) which is inclined at an angle in the range of 20° to 60° with respect to the center longitudinal axis (22) of the leg (16).

2. The staple strip (10) according to claim 1, **characterized in that** the end sections (20) of a staple (12) are mirror symmetrical to a first plane of symmetry (30) enclosing the center longitudinal axis (22) of both legs (16) of the staple (12).

3. The staple strip (10) according to one of the claims 1 or 2, **characterized in that** the end section (20) of a leg (16) is mirror symmetrical to a second plane of symmetry (32) which encloses the center longitudinal axis (22) of this leg (16), and is disposed perpendicular to the crown (14) connected to this leg (16).

4. The staple strip (10) according to one of the claims 2 or 3, **characterized in that** the end section (20) has two first edges (26) which are disposed in the first plane of symmetry (30).

5. The staple strip (10) according to one of the claims 3 or 4, **characterized in that** the end section (20) has two second edges (36) which are disposed in the second plane of symmetry (32).

6. The staple strip (10) according to one of the claims 4 or 5, **characterized in that** the two first edges (26) and/or the two second edges (36) are disposed at an angle in the range of 20° to 60° with respect to the center longitudinal axis (22).

7. The staple strip (10) according to one of the claims 5 or 6, **characterized in that** the two second edges (36) are longer than the two first edges (26).

8. The staple strip (10) according to one of the claims 1 to 7, **characterized in that** the end sections (20) have a square or diamond shaped cross-section.

9. The staple strip (10) according to one of claims 1 to 3, **characterized in that** the end sections (20) have an oval or circular cross-section.

10. The staple strip (10) according to one of claims 1 to 9, **characterized in that** the cylindrical sections (18) and/or the crown (14) have an oval or circular cross-section.

11. The staple strip (10) according to one of the claims 1 to 10, **characterized in that** the cylindrical sections (18) and/or the crown (14) are produced from a wire having a circular cross-section that is provided with two flattenings (34) lying across from each other, using rolling.

12. The staple strip (10) according to one of the claims 1 to 11, **characterized in that** the cylindrical sections (18) and/or the crown (14) of the staple (12) have a diameter in the range of 2 mm to 4 mm.

13. The staple strip (10) according to one of claims 1 to 12, **characterized in that** the staples (12) are connected together using an adhesive means.

## Revendications

1. Agrafeuse (10) avec une multitude d'agrafes (12) reliées les unes aux autres, pour la fixation de plaques d'isolation sur des supports en bois, dans laquelle
• chacune des agrafes (12) comporte un dos (14) et deux jambes (16) reliées au dos (14) et agencées parallèlement l'une à l'autre,
• la longueur des jambes (16) mesure au moins trois fois la largeur du dos (14) et
• chaque jambe (16) comporte une section cylindrique (18) et une section terminale (20), **caractérisée en ce que**
• chaque section terminale (20) s'affine avec un espacement croissant par rapport à la section cylindrique (18) et converge en pointe, en un point (24) situé sur un axe longitudinal médian (22) de la jambe (16) respective, dans laquelle
• la section terminale (20) d'une jambe (16) comporte au moins une surface biseautée (28) inclinée par rapport à l'axe longitudinal médian (22) de la jambe (16) selon un angle compris entre 20° et 60°.

2. Agrafeuse (10) selon la revendication 1, **caractérisée en ce que** les sections terminales (20) d'une agrafe (12) sont symétriques par rapport à un premier plan de symétrie (30) comprenant les axes longitudinaux médians (22) des deux jambes (16) de cette agrafe (12).

3. Agrafeuse (10) selon la revendication 1 ou 2, **caractérisée en ce que** la section terminale (20) d'une jambe (16) est symétrique par rapport à un deuxième plan de symétrie (32) comprenant l'axe longitudinal médian (22) de cette jambe (16) et s'étendant perpendiculairement au dos (14) relié à cette jambe (16).

4. Agrafeuse (10) selon la revendication 2 ou 3, **caractérisée en ce que** la section terminale (20) comporte deux premières arêtes (26) agencées dans le premier plan de symétrie (30).

5. Agrafeuse (10) selon la revendication 3 ou 4, **caractérisée en ce que** la section terminale (20) comporte deux deuxièmes arêtes (36) agencées dans le deuxième plan de symétrie (32).

6. Agrafeuse (10) selon la revendication 4 ou 5, **caractérisée en ce que** les deux premières arêtes (26) et/ou les deux deuxièmes arêtes (36) sont agencées selon un angle compris entre 20° et 60° par rapport à l'axe longitudinal médian (22).

7. Agrafeuse (10) selon la revendication 5 ou 6, **caractérisée en ce que** les deux deuxièmes arêtes (36) sont plus longues que les deux premières arêtes (26).

8. Agrafeuse (10) selon l'une des revendications 1 à 7, **caractérisée en ce que** les sections terminales (20) présentent une section transversale carrée ou rhombique.

9. Agrafeuse (10) selon l'une des revendications 1 à 3, **caractérisée en ce que** les sections terminales (20) sont ovales ou circulaires dans leur section transversale.

10. Agrafeuse (10) selon l'une des revendications 1 à 9, **caractérisée en ce que** les sections cylindriques (18) et/ou le dos (14) sont ovales ou circulaires dans leur section transversale.

11. Agrafeuse (10) selon l'une des revendications 1 à 10, **caractérisée en ce que** les sections cylindriques (18) et/ou le dos (14) sont constitués d'un fil métallique circulaire dans sa section transversale, lequel est pourvu de deux aplatissements opposés (34) réalisés par cylindrage.

12. Agrafeuse (10) selon l'une des revendications 1 à 11, **caractérisée en ce que** les sections cylindriques (18) et/ou les dos (14) des agrafes (12) présentent un diamètre compris entre 2 mm et 4 mm.

13. Agrafeuse (10) selon l'une des revendications 1 à 12, **caractérisée en ce que** les agrafes (12) sont reliées entre elles par un agent adhésif.
